# EUROPEAN PATENT APPLICATION

(11) **EP 3 474 183 A1**
(43) Date of publication of application: **24.04.2019**
(21) Application number: 17197518.8
(22) Date of filing: 20.10.2017
(51) Int. Cl.: G06K 9/00

(54) **SYSTEM FOR TRACKING PRODUCTS AND USERS IN A STORE**

(71) Applicant: Checkout Technologies srl, 37122 Verona (IT)
(72) Inventor: Levkovskiy, Jegor, 14020 Villa San Secondo (AT) (IT); Pandian, Enrico, 37129 Verona (IT)
(74) Representative: Bottino, Giovanni

(57) **Abstract**

System for tracking products and users in a store provided with product display areas, such as stands, display racks or the like, of the supermarket type or the like, comprising video signal acquiring means and video signal processing means (10).

Acquisition means comprise a plurality of first video cameras (23) placed at the stands (21) of the store and a plurality of second video cameras (24) placed in a position above the stands (21).

Processing means (10) comprise a plurality of secondary processing units for processing at least the video signal acquired by first video cameras (23) and at least one main processing unit in communication with the secondary processing units.

Moreover the secondary processing units are configured such to activate the main processing unit on the basis of gestures of one or more users, the processing means comprising means recognizing the gestures of one or more users.

## Description

The present invention relates to a system for tracking products and users in a store provided with product display areas, such as stands, display racks or the like, of the supermarket type or the like.

The system comprises video signal acquiring means and video signal processing means.

The development of modern digital and information technologies and the consequent reduction of costs, as well as simplicity of use of the technologies, in the last years have driven towards automation of processes also in common everyday activities.

One of the most widespread activities, such as doing shopping, has been subjected to a deep renovation and automation, in order to help users.

On-line shopping is more and more used, where a user can purchase products, also of everyday use, directly over Internet.

Therefore stores are obliged to adapt themselves by offering more and more technological, innovative and efficient services allowing users to do shopping in a simple and quick manner.

Thus processes taking place inside stores are desired to be automatized while limiting as much as possible the action of a possible shop assistant or person in charge of the store.

However the fact of maximizing the contribution of automatic systems for managing stores inevitably generates different drawbacks.

Leaving out of consideration security problems, related to shoplifting, concealment of goods and products, as well as product packaging tampering, the systems known in prior art have problems related to the management of stock, since it is particularly complicated to immediately accurately define the products purchased by the users, such to update in real-time both a possible shopping list of the users and the stock.

The difficulty in updating the shopping list in real-time does not allow the processes following the shopping to be automatized, such as for example the payment of purchased products.

The automation of payment is the target of systems known in prior art, since this is the most time spending action, due to the fact that it requires the recognition of purchased products and the association of them to the user.

Systems known in prior art suggest solutions that require the use of specific devices for product recognition or complicated and not much user friendly systems or systems requiring a high computational power.

Therefore there is the need not satisfied by prior art systems to provide an efficient system easy to be used, allowing procedures in a store to be speeded up, by automating critical processes, such as for example check-out procedures, particularly the automation in scanning products picked up by the individual user.

The present invention achieves the above objects by providing a system tracking products and users as described before, wherein acquisition means comprise a plurality of first video cameras placed at the stands of the store and a plurality of second video cameras placed in a position above the stands.

Moreover processing means comprise a plurality of secondary processing units for processing the video signal acquired at least by first video cameras and at least one main processing unit in communication with the secondary processing units.

Secondary processing units are configured such to activate the main processing unit on the basis of gestures of one or more users, the processing means comprising means recognizing the gestures of one or more users.

The arrangement just disclosed allows a particularly slim architecture of the system to be obtained requiring limited computational tasks.

The system is composed of several satellites or modules, related to the stands of the store, that are in alert condition and that activate the main processing unit only when they detect a specific gesture of a user, by means of gesture recognizing means.

Secondary processing units can be connected also to second video cameras, such to process also the video signal thereof, besides that of first video cameras.

Such aspect is particularly important in recognizing gestures of the users, since recording from the upper position allows movements of users to be monitored at best and consequently allows the main processing unit to be warned.

As it will be clear from the following description, the system of the present invention aims at recognizing users, their gestures and collected products, therefore all the described characteristics aim at optimizing such procedures.

According to a possible embodiment second video cameras are stereoscopic video cameras.

The use of such type of video cameras makes it possible to analyze the depth where the limbs of the several users are, in order to accurately identify their gestures.

As said above, the system of the present invention is configured such to have a plurality of secondary processing units "under alert", that warn the main processing unit if an activity picking up or releasing a product by one or more users is detected.

For this reason, advantageously each secondary processing unit comprises:
a first processing level intended to recognize user faces,
a second processing level intended to recognize objects in the stand,
a third processing level intended to recognize user gestures.

According to one improvement such processing levels provide to use one or more artificial neural networks.

Such neural networks can process video signals of the first video cameras and can advantageously use pre-compiled datasets for recognition of gestures and objects.

It is specified that from hardware perspective, the main processing unit and secondary processing units can be integrated into a single device, or can be physically separated.

According to a preferred variant embodiment the processing means comprise one or more storage units and processor means for executing a logic program, whose execution provides the following steps:
a) Acquiring products present in a specific stand before the passage of one or more users;
b) Recognizing the users present at the specific stand;
c) recognizing the gestures of the users at the stand;
d) Acquiring products present in the stand after the passage of one or more users;
e) Identifying at least one product picked up from or released in the stand;
f) Filing in a purchase list associated to each user, such list showing the products picked up by each user from the stand.

The main processing unit will manage data collected at each stand, to generate a purchase list associated to the user and to update the number of picked up products and products present in the store and/or in stock.

According to an improvement of the system of the present invention it is possible to provide the execution of the logic program to have a step training neural networks, wherein neural networks are trained by using specific datasets generated to allow neural networks to recognize products and gestures of the users.

Datasets are fed to the neural network that adapts itself for the recognition of what is inside the dataset.

For example for the recognition of a product, images of the products are acquired and during the training of the neural networks some characteristics of acquired images are slowly modified (pixel color, position and point of view of the product, etc) to optimize the recognition on that dataset.

Thus the neural network learns to recognize not only such dataset, but it is able also to recognize situations with changes different from the origin dataset, such as for example a point of view different from those in the dataset, but with enough information to go back to a known product or gesture.

The neural network is able also to accomplish a self-learning. If the network is not able to make a recognition of an item, it can be indicated by an operator. The neural network uses information received from the operator to learn to recognize better the product and therefore to improve its own performances.

One of the particular aspects of the system of the present invention is that the evaluation of a product being picked up from or released in a stand is not limited to the study of the gestures of the user and to a comparison of images of the user or of the stand before and after the passage of the user.

Such evaluation results from several information, deriving from processing that can be performed on video signals.

Particularly the first video cameras acquire the planogram (that is images of products on the stands) and the face of the user, while the combination of first and second video cameras acquire gestures of each user.

Moreover the first video cameras, as it will be described below, can be suitably mounted inside stands, such to obtain both a picture in front of the stand, and a picture towards the products of the stand on which are mounted.

Thus the first video cameras can detect both the gesture and the product picked up from or released in the stand.

The combination of such acquisitions works in synergic manner to give an accurate result about a specific product being picked up, if any.

As it will be more clear from the disclosure of some embodiments, such acquisitions generate probabilities that an event has occurred, whose combination guarantees the certainty that a specific product has been picked up by a specific user.

Advantageously it is possible to provide the several acquisitions to give different contributions, that is to have a different weight in the calculus of probability.

For such reason processing means have means weighing the contribution of each acquired video signal.

For example it is possible to provide the planogram to contribute to a less extent in calculating the result with respect to gesture recognition.

Information deriving from the planogram is not always reliable due above all to the arrangement of products in the stand: if there are two identical products one behind the other, not necessarily the planogram makes it possible to evaluate one of them being actually picked up.

The system of the present invention is not limited to a product picking up area, but it handles the tracking of users and products inside the whole store.

According to one improvement there is provided a module for managing an access area, providing means recognizing one or more users.

Such recognition means have software instructions, whose execution provides:
- acquiring the face of a user;
- extracting the face map of the user;
- generating a unique identification code,
- associating the face map to the unique identification code.

By the recognition means, also users that have not been registered in the system beforehand can be monitored inside the store, since it is possible to associate a unique identification code to each user by means of the face map.

According to a further improvement the system of the present invention can comprise also a module for managing an exit area, that provide check-out means.

Check-out means have software instructions, whose execution provides:
- identifying the leaving user and the associated product list;
- storing the product list,
- payment,
- cancelling the face map of the user.

Check-out means, besides automating a payment that considers in real-time all purchased products, meet also requirements of actual privacy standards.

The system of the present invention guarantees that when checking out the shopping list is associated to the user.

Based on implementation needs related to the store where system is installed, it is also possible to select the payment system, such as direct charge on credit card (for example by a payment gateway to which the system can be connected), or payment by POS or cash, as in payment systems known in prior art.

Inside the user history only data about purchased products are stored, but details of the face map of the user are cancelled, he/she being recognized only by a unique identification code.

The unique identification code can be made according to any of the manners known in prior art, QR, NFC, RFID codes, limited time token, etc.

Such characteristic has also an advantage as regards system development.

If a user entering the store enters with accessories hiding parts of the face (hat, scarf, eyeglasses), the image of such face cannot be associated to the image stored beforehand.

Advantageously the system of the present invention can store each time a new image of the face, such that the user can be followed inside the store and that the image can be possibly associated to a unique identification code, above all for registered users.

The system of the present invention allows a user to be recognized also with the partially hidden face by the presence of specific algorithms reconstructing the missing part of the face.

For example the possibility of taking a new face map is useful for groups of people that want to use the same account, without the need of using new accounts every time, while maintaining the same payment system.

Finally according to a further embodiment the system of the present invention can have means identifying the face expression of a user standing at a stand and/or when picking up a product from the stand.

Such means can be integrated in first video cameras and generate information particularly important for evaluating purchase trends, above all in marketing field.

Such means work in synergy with the rest of the system, since it is possible to associate a specific expression when purchasing a specific product, thus obtaining a feedback about user satisfaction.

These and other characteristics and advantages of the present invention will be more clear from the following description of some embodiments shown in the annexed drawings wherein:
figure 1 is a functional block diagram of the system of the present invention according to a possible variant embodiment;
figure 2 is a schematic diagram of a possible embodiment of the system of the present invention;
figure 3 is a flow chart intended to describe in detail the operation of the system of the present invention.

It is specified that figures annexed to the present patent application show some embodiments of the system of the present invention, in order to better understand advantages and characteristics disclosed.

Therefore such embodiments have to be intended merely for illustration purposes and not as a limitation to the inventive concept of the present invention, namely to provide a system for tracking products and users allowing procedures in a store to be efficaciously automated.

Particularly figures refer to a possible embodiment where the system of the present invention is provided in a store of the supermarket type, but from the characteristics described above it clearly results how such system can be easily adapted to any environment where movements of products and users are provided, such as for example a warehouse.

Moreover figures annexed to the present patent application refer to the presence of one or more stands.

However it is clear how the system is not limited only to stands, but it can be easily implemented in any display area for visually accessible products.

For example it is possible to use the system of the present invention also in common product displaying "islands", where products are not orderly arranged, such as baskets, pallets, refrigerated cabinets or other item displaying solutions simply by modifying the position of video cameras acquiring products and gestures of users.

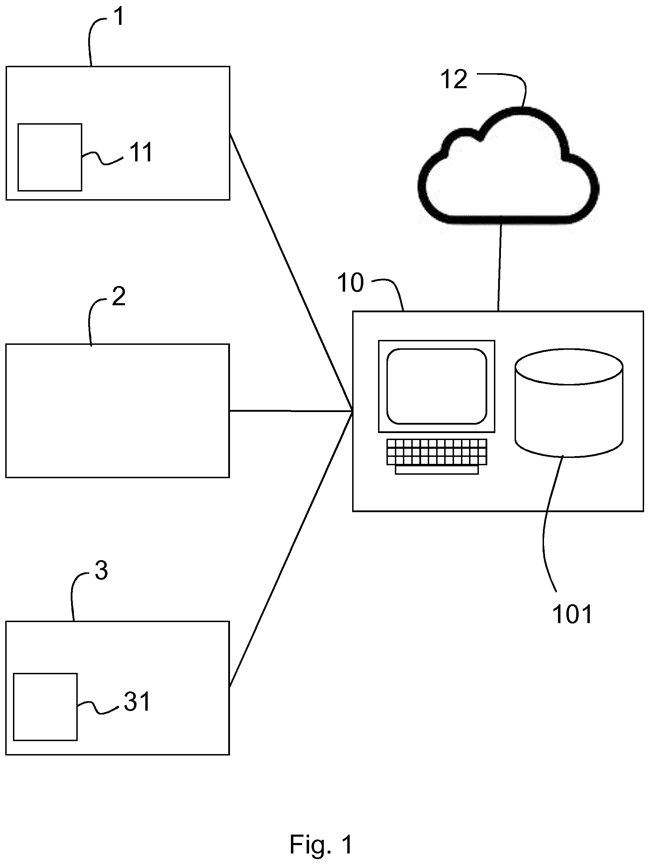

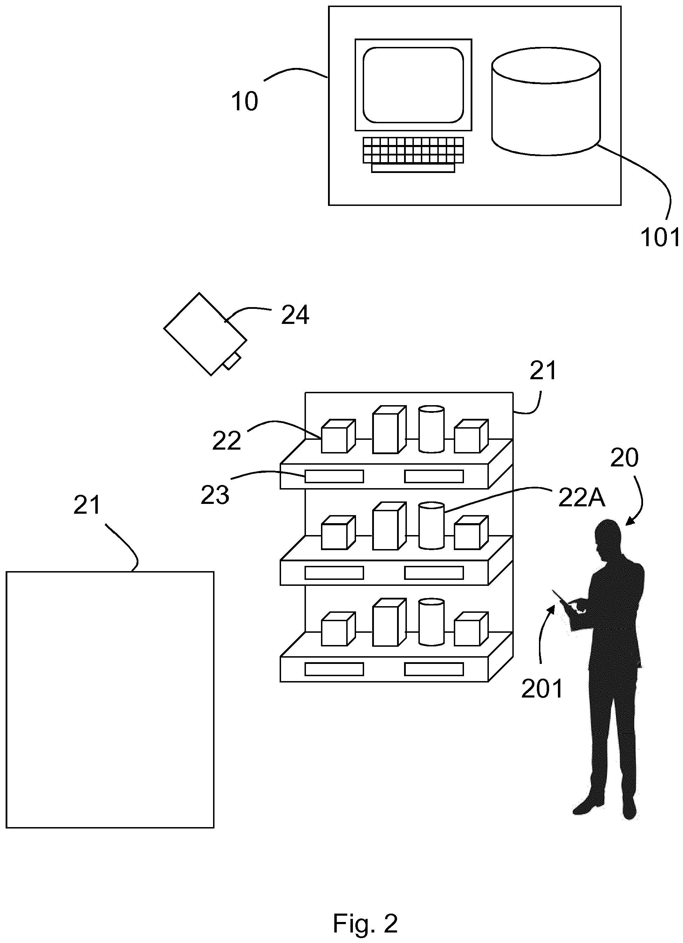

Figure 1 shows a functional block diagram of the system of the present invention: the system can be organized in modules, one module for access area 1, one module for product picking up area 2, a detail thereof being shown in figure 2, and one module for exit area 3.

All such modules are managed by processing means 10.

Inside the modules there are provided means acquiring a video signal processed by the processing means 10.

The operation of the access area 1 and exit area 3 will be described below.

Referring to figure 2, inside the picking up area 2 there are provided two stands 21 having a plurality of shelves, some products 22 being placed thereon.

For illustration simplicity only two stands 21 are shown in figure 2, but it is clear how it is possible to provide any number of stands 21, as well as any number of products 22 placed on stands.

Acquisition means comprise a plurality of first video cameras 23 placed at the stands 21 and a plurality of second video cameras 24 placed in an upper position with respect to stands 21.

Processing means 10 comprise a plurality of secondary processing units intended to process the video signal acquired at least by the first video cameras 23 and at least one main processing unit in communication with the secondary processing units.

Also in this case, the configuration of the systems is in modules: secondary processing units are local units that process the video signal of what occurs locally at each stand 21, or even at each shelf of the stand 21, while the main processing unit manages the operation of all the secondary processing units.

Particularly the secondary processing units are configured such to activate the main processing unit on the basis of gestures of one or more users 20, the processing means comprising means recognizing gestures of one or more users.

The fact of dividing, as regards software, the processing units into local (secondary) units and main unit has not to necessarily reflect a division as regards hardware: processing units can be separate or integrated inside the processing means 10.

First video cameras 23 can be made according to any manner known in prior art.

Advantageously they are configured such that video cameras 23 of a stand 21 record at least partially the products of at least one shelf of the stand 21 on which they are installed and record the stand 21 in front of them.

Thus it is possible to obtain a whole acquisition of the stand 21 in front of them and a detailed acquisition of products 22.

Moreover video cameras 23 are preferably of the "wide angle" type, such to capture a wide portion of the space in front of the stand 21 where they are installed.

Each secondary processing unit comprises:
a first processing level intended to recognize faces of the users of the products placed on the stand 21 in front of the stand where the first video cameras are mounted,
a second processing level intended to recognize products 22 in the stand 21,
a third processing level intended to recognize gestures of users.

The user 20 enters the supermarket and inside the access area 1 a first identification takes place: a faceprint of the face of the user 20 is stored in a storage unit 101.

The use of the faceprint allows the system of the present invention not to compare images, but to compare points on a Cartesian plane thus reducing the necessary computing power.

An identification code is associated to such faceprint, such that each time a video camera 23 will capture such specific face, it will be possible to identify the position of the user 20.

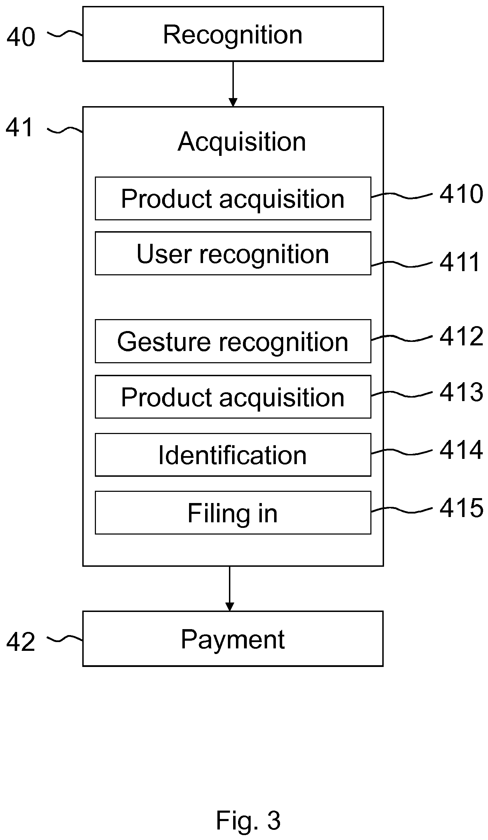

Different modes for the access of the user 20 will be described below with particular reference to figure 3.

Advantageously it is possible to provide also information about products 22 present in the stands 21 inside a database 101.

Such information for example can be about EAN codes, price or other data important for the user, or for the operator of the store (both the cashier and the person in charge of placing products on the stands).

Once entered, the user 20 is inside the picking up area 2 and he/she decides to pick up the product 22A present on the second shelf of the stand 21.

Video cameras 23 acquire a continuous video stream sent to secondary processing units, that can activate the main processing unit if a specific event takes place.

For example if the user 20 stands between two stands 21 and he/she stretches out hands towards a shelf, this can be identified as a gesture picking up a product, that activates the local system (neural networks) of the shelf, identifying the gesture and/or the picked up product only for the shelf involved by the action.

In some cases the main processing unit can be involved to manage possible temporary critical conditions.

Video cameras 24 preferably are stereoscopic video cameras, such to have a depth of vision and to identify gestures of the user 20.

The video camera 24 moreover allows the gestures and the precise position to be identified with respect to the stand in front of which the user stands. The video camera 24 carries out a detection related to three Cartesian axes x, y and z while the video camera 23 detects only x and y planes. By the triangulation of information it is possible to go back to the person to whom the hand acting on the shelf of the stand belongs, distinguishing him/her from people standing near it.

Video cameras 23 moreover record the planogram, namely a view of all the products on the stand 21 in front of it.

As soon as the user 20 stands between the two stands his/her face is detected and recognized by video cameras 23.

Video cameras 24 and video cameras 23 operate in a synergic manner, such to obtain for each user both the recognition, video cameras 23, and the position, video cameras 24.

Moreover video cameras 24 identify also gestures of users, allow identifying how many users are present and whether they are in a position close enough to the stand 21 to pick up a specific product 22.

The video stream is converted in a data stream providing to generate a Cartesian plane on which both users 20, coordinates of their limbs being provided, and products 22, whose coordinates are provided by the planogram, are placed.

The user 20 stands between two stands 21, makes a gesture that activate the processing system related to the stand, such that his/her gesture is also recorded from above.

Video cameras 24 are able to confirm the height at which the arm of the user 20 moves, while the planogram can indicate which product was present at the coordinates where the arm of the user 20 actually is present.

As said above, video cameras 23 are composed of a first group capturing the stand 21 in front of it and a second group capturing the products of the stand on which they are mounted.

Products 22 on the stand 21 are recorded by video cameras 23 facing the products 22, that capture the shelves.

The video camera 24 can activate or deactivate the local system of the stand 21 upon the passage of a person. Once the system of stand 21 is activated, the measurement of where the user is and where his/her hands are take place and the faceprint is associated to the user.

Video cameras 23 that capture the shelves await for something to happen: meanwhile they detect which products they are visualizing. When a gesture is made, the system of neural networks of the stand or shelf is enabled and the recognition of the gesture and of the picked up or released product starts. Putting together information from video cameras 23 and video camera 24 will allow who has picked up or released a specific product to be indicated.

Advantageously it is possible to provide when there is a change in the video stream of the video cameras 23 capturing the detailed view of the shelves, to operate neural networks to analyse what is going on. Neural networks recognize the moved product and the gesture made.

The video camera 24 captures from above the user that has made the gesture and his/her relative position and triangulates such information with the video stream of video cameras 23 that detect the faces.

The acquisition of the planogram, then can confirm that a product has been picked up or released, if there is change between two frames taken before and after the user passage.

Once the user 20 moves away, the new planogram can confirm the product has been picked up.

The signal acquired by the video cameras 23 that capture in direction of the shelf on which they are installed, recognizes the picked up product.

Once the planograms are recorded before and after the passage of the user 20, once the user 20 is recognized by the face map recorded by the video cameras 23 and once gestures and products are identified, the system is able to process all data and to evaluate the probability that something has happened, particularly:
it is probable that the product 22A has been picked up,
it is probable that the user 20 has picked up the product 22A,
it is probable that the user 20 is close to another user (not shown),
it is probable that the user 20 has picked up the product 22A, due to gestures,
it is probable that the product 22A has been picked up from the second shelf of the stand, due to the depth of the hand that moved.

By all such analyses of video streams, a series of results is obtained that once summed together gives a final result, 1 or 0 deriving from percentages of probability.

The system recognizes the products and associate them to the user picking them up on the basis of the gestures made by him/her.

According to a possible embodiment the system can comprise means identifying the face expression of a user upon picking up a product 22 from the stand 21.

Moreover the system can provide a software application to be installed on a user portable device 201, such as smartphone or the like, by means of which the user 20 can check the list of picked up products.

The same process occurs also if the user 20, instead of picking up a product 22, puts back it on the stand 21.

If the user 20 puts back a product 22 out of place and if such product is not recognized by video cameras 23 of the corresponding stand 21, it is possible that secondary processing units related to such stand transmit a warning to the main processing unit, that communicates to the secondary processing units of other stands 21 the unrecognized product.

The stand 21 associated with the unrecognized product will provide to recognize the product and will warn the main processing unit.

Now the operator of the supermarket can place such product in the proper manner or can confirm that the product will be taken from the stand where it is.

It is possible to provide further sensors to help the processing by the processing means 10: for example it is possible to provide RFID tags, pressure sensors or infrared sensors placed on shelves 21 for recognizing the products 22.

With a particular reference to figures 1 and 3, the user enters the supermarket through the access area, that has user recognition means 11, such that recognition 40 occurs.

Recognition means 11 can for example by composed of video cameras and bar code scanners, QR code scanners or the like.

The user can be registered or not registered.

If the user is a not registered user the system acquires the user face, extracts the face map and stores it in the processing means 10 and associates an identification code to such map, such to follow the user in the supermarket.

If the user is a registered user, the system can generate a unique code, such as a QR code with a limited duration, the recognition means read the QR code and identify the user.

Even in the case of a registered user the face recording is performed, such to follow the user in the supermarket, associating the face image recorded upon the access to the identification code related to the registered user.

Personal data of the different users can be thus stored in a cloud server 12, as well as history, purchased products, visited stores, market trends, etc.

Once the access and recognition 40 are performed, the user goes in the picking up area to purchase products of interest.

The purchase process 41 has the characteristics described above and particularly:
a) acquiring 410 products present in a specific stand before the passage of one or more users;
b) recognizing 411 the users present at the specific stand;
c) recognizing 412 the gestures of the users at the stand;
d) acquiring 413 products present in the stand after the passage of one or more users;
e) identifying 414 at least one product picked up from or released in the stand;
f) filing in 415 a purchase list associated to each user, such list showing the products picked up by each user from the stand.

As described in figure 2, preferably step e) is obtained by a combination of video signal processing, particularly:
Acquisition of the face of one or more users, carried out by video cameras 23,
Acquisition of products present in stands, carried out by video cameras 23,
Acquisition of users and of their gestures, carried out by the combination of video cameras 23 and 24.

The user 20, as mentioned above, can display on the smartphone 201 the list of picked up products, that will be updated in real-time and that preferably will be saved in the cloud server 12.

Each time a product is picked up, it is immediately saved and associated to the user also in cloud. If a user has the software application saved on his/her smartphone or any other means displaying the list of picked up products (for example a monitor can be provided in the store to which the user gets near to see the updated product list), he/she will display information saved in cloud related to the purchase he/she is doing, related to already done purchases and other information among which also marketing actions, for example promotions, dedicated offers or the like.

Once products he/she desires to pick up are ended, the user goes to the exit area 3 to make the payment 42.

In the exit area there can be provided checkout means 31 for the user, that can comprise recognition means 11 present in the access area 1.

Such checkout means have software instructions, whose execution provides:
- identification of the leaving user and of the associated product list,
- storage of product list,
- payment,
- removal of face image (face map) of the user.

The payment can occur in the standard manners known in prior art in case of not registered user.

In case of registered user, besides the known manners it is possible to provide an automatic charge without the need of passing through cash desks.

In this case the system will check the user identity, will evaluate the method of payment associated to such user to cover the amount of money resulting from the sum of purchased products.

The software application present in the smartphone 201 of the user 20 therefore can warn the user about the payment made.

## Claims

1. System for tracking products and users in a store provided with product display areas, such as stands (21), display racks or the like, of the supermarket type or the like, comprising video signal acquiring means and video signal processing means (10),
**characterized in that**
acquisition means comprise a plurality of first video cameras (23) placed at the stands (21) of the store and a plurality of second video cameras (24) placed in a position above the stands (21),
processing means (10) comprising a plurality of secondary processing units for processing the video signal acquired at least by first video cameras (23) and at least one main processing unit in communication with the secondary processing units,
the secondary processing units being configured such to activate the main processing unit on the basis of gestures of one or more users, the processing means comprising means recognizing the gestures of one or more users.

2. System according to claim 1, wherein second video cameras (24) are stereoscopic video cameras.

3. System according to one or more of the preceding claims, wherein each secondary processing unit comprises:
a first processing level intended to recognize user faces,
a second processing level intended to recognize products (22) in the stand (21),
a third processing level intended to recognize user gestures.

4. System according to one or more of the preceding claims, wherein said processing means (10) comprise one or more storage units and processor means for executing a logic program, whose execution provides the following steps:
a) acquiring (410) products present in a specific stand before the passage of one or more users;
b) recognizing (411) the users present at the specific stand;
c) recognizing (412) the gestures of the users at said stand;
d) acquiring (413) products present in said stand after the passage of one or more users;
e) identifying (414) at least one product picked up from or released in said stand;
f) filing in (415) a purchase list associated to each user, such list showing the products picked up by each user from said stand.

5. System according to claim 4, wherein the execution of said logic program provides a step training said neural networks, which training step uses specific datasets of products and/or gestures.

6. System according to one or more of the preceding claims, wherein step e) is obtained by a combination of video signal processing, particularly:
acquisition of the face of one or more users, carried out by first video cameras (23),
acquisition of products (22) present in stands (21), carried out by first video cameras (23),
acquisition of users and of their gestures, carried out by first video cameras (23) and by second video cameras (24).

7. System according to claim 6, wherein said processing means comprise weighing means intended to calculate the contribution of each video signal for said combination.

8. System according to one or more of the preceding claims, wherein there is provided a managing module for managing an access area (1) of the store, the access area having means (11) recognizing one or more users, which recognition means (11) have software instructions, whose execution provides:
- acquiring the face of a user;
- extracting the face map of said user;
- generating a unique identification code,
- associating the face map to said unique identification code.

9. System according to one or more of the preceding claims, wherein there is provided a managing module for managing an exit area (3) of the store, the exit area having checkout means (31), which checkout means (31) have software instructions, whose execution provides:
- identifying the leaving user and the associated product list;
- storing the product list,
- payment,
- cancelling the face map of the user.

10. System according to one or more of the preceding claims, wherein there are provided means identifying the face expression of a user near the stand (21).
